Europäisches Patentamt

European Patent Office

Office européen des brevets

(19)

(11) Numéro de publication: **0 382 270**

**A1**

(12) # DEMANDE DE BREVET EUROPEEN

(21) Numéro de dépôt: **90200071.0**

(22) Date de dépôt: **11.01.90**

(51) Int. Cl.5: **B23K 3/02**

(30) Priorité: **07.02.89 IT 5285789**

(43) Date de publication de la demande:
**16.08.90 Bulletin 90/33**

(84) Etats contractants désignés:
**DE ES FR GB**

(71) Demandeur: **ELTO S.p.A.**
**Via Nazario Sauro 26**
**I-10097 Collegno (Torino)(IT)**

(72) Inventeur: **Loewenthal, Enrico**
**Via Giacosa 11**
**I-10098 Rivoli Torino(IT)**

(74) Mandataire: **Patrito, Pier Franco, Dr. Ing.**
**Cabinet PATRITO BREVETTI Via Don Minzoni**
**14**
**I-10121 Torino(IT)**

(54) **Fer à souder à main avec poignée creuse entourant l'élément thermique.**

(57) Un fer à souder à main, comprenant une poignée (4) creuse et un support (1) renfermant un élément thermique et se terminant par une pointe à souder (2), dans lequel le support (1) renfermant l'élément thermique et se terminant par la pointe à souder (2) s'étend pour une grande partie de sa lortgueur à l'intérieur et à une certaine distance de la paroi de la poignée creuse (4), d'une extrémité de laquelle fait saillie sur une extension limitée la pointe à souder (2). La poignée présente, en une région sur laquelle ne se disposent pas les doigts de l'opérateur, une ample fenêtre (7) autorisant une circulation de l'air entre le creux de la poignée (4) et l'extérieur. La poignée forme, vers son extrémité arrière, un corps de support (3) auquel est fixé le support (1) de l'élément thermique et de la pointe à souder (2), et au-delà de ce corps de support elle comporte une partie (5) définissant une chambre (6) destinée à renfermer les connexions électriques (11) entre l'élément thermique et les conducteurs d'alimentation.

FIG. 4

EP 0 382 270 A1

# FER A SOUDER A MAIN AVEC POIGNEE CREUSE ENTOURANT L'ELEMENT THERMIQUE

La présente invention a pour objet un fer à souder à main comprenant une poignée et un support renfermant un élément thermique et se terminant par une pointe à souder.

Les fers à souder à main comportent, dans la plupart des cas, une poignée, d'une extrémité de laquelle s'étend, sur le même axe de la poignée et sur son prolongement, une tige tubulaire renfermant un élément thermique et se terminant par une pointe à souder. La région de la poignée qui est saisie par l'opérateur est ainsi située à une distance considérable par rapport à la pointe à souder, de sorte qu'il n'est pas facile pour l'opérateur de manipuler la pointe à souder avec sensibilité et précision spéciales, comme il est nécessaire dans certains cas, par exemple dans le soudage des circuits électroniques. Dans certains types de fers à souder, au contraire, la poignée n'est pas coaxiale avec la tige et elle est conformée en pistolet. Cet agencement permet de saisir le fer à souder d'une façon plus confortable, spécialement s'il a un poids considérable. Toutefois la distance entre la région saisie et la pointe à souder n'est pas réduite en mesure considérable par cet agencement, et l'inconvénient ci-dessus indiqué n'est pas supprimé.

Le but de la présente invention est de perfectionner les fers à souder à main du type indiqué, en vue de permettre à l'opérateur de manipuler facilement la pointe à souder avec la plus grande précision et sensibilité.

Ce but est atteint, suivant la présente invention, en ce que la poignée du fer à souder est creuse, et que le support renfermant l'élément thermique et se terminant par la pointe à souder s'étend, pour une grande partie de sa longueur, à l'intérieur et à une certaine distance de la paroi de la poignée creuse, d'une extrémité de laquelle fait saillie sur une extension limitée la pointe à souder.

Par cet agencement, la région dans laquelle l'opérateur saisit la poignée de l'outil se trouve à une distance le plus possible réduite par rapport à la pointe à souder, ainsi permettant une manipulation aisée et très soignée.

De préférence la poignée creuse comporte, en une région sur laquelle ne se disposent pas les doigts de l'opérateur, une ample fenêtre qui autorise une circulation de l'air entre le creux de la poignée et l'extérieur.

Par cet agencement on limite considérablement le rechauffement de la poignée par l'élément thermique situé dans son creux.

Ces caractéristiques et d'autres de l'objet de l'invention ressortiront plus clairement de la suivante description d'un mode de réalisation, constituant un exemple et non pas une limitation, schématiquement représenté dans les dessins annexés, dans lesquels:

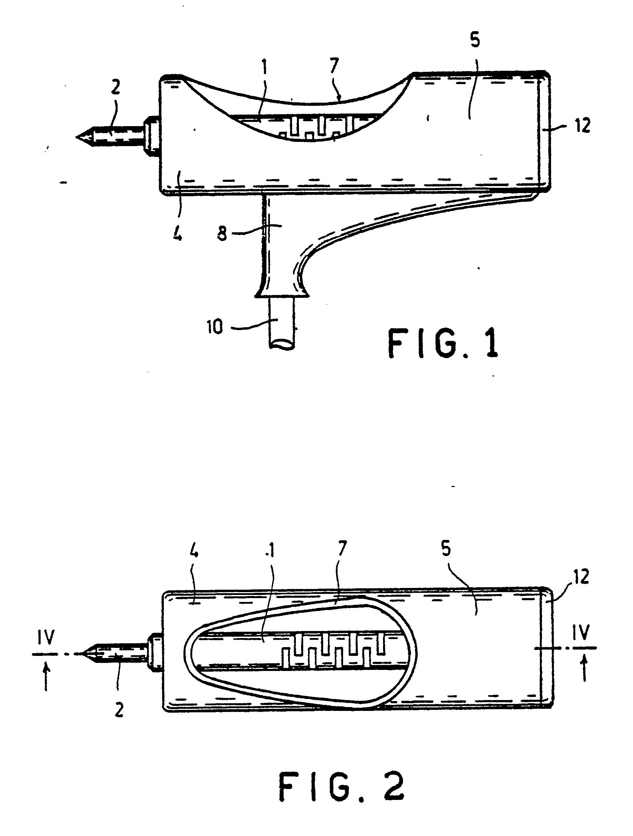

Fig. 1 est une vue latérale d'un fer à souder suivant la présente invention;

Fig. 2 en est une vue en plan;

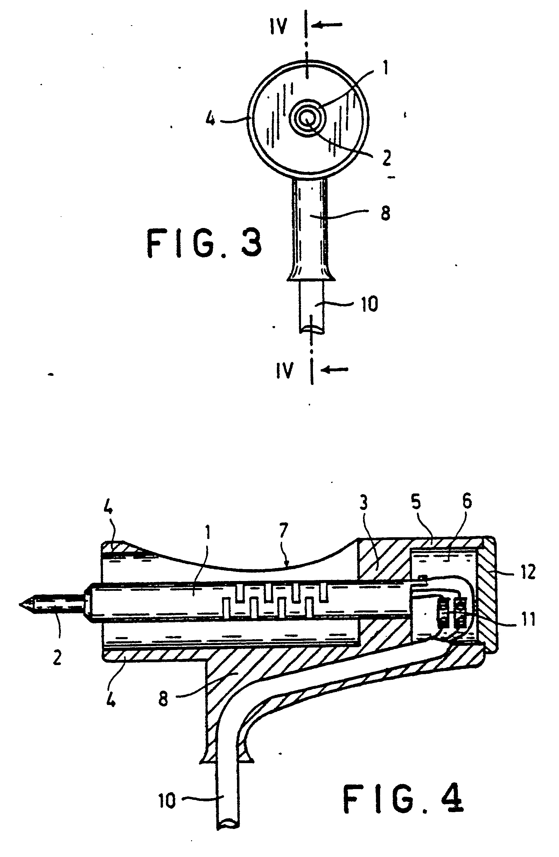

Fig. 3 en est une vue de face, du côté de la pointe à souder; et

Fig. 4 en montre une section faite suivant les lignes IV-IV des figures 2 et 3.

Le fer à souder représenté comporte, comme d'habitude, un support, qui dans ce mode de réalisation a la forme d'une tige tubulaire 1, renfermant un élément thermique (non représenté) pour le rechauffement du fer à souder, et se terminant à l'avant par une pointe à souder 2. Soit le support 1, soit la pointe à souder 2, peuvent être de tous genres et peuvent avoir toute forme, connue ou spéciale. En particulier, le support 1 renfermant l'élément thermique destiné à rechauffer la pointe à souder 2 peut avoir la forme habituelle d'une tige tubulaire, et il peut être pourvu, comme dans le mode de réalisation représenté, de fentes ou d'ouvertures ayant le but de modifier sa conductivité thermique. Ces fentes, d'autre part, peuvent faire défaut en d'autres modes de réalisation. La pointe à souder 2 peut avoir une forme en pointe, comme representée, ou bien une forme aplatie ou toute autre forme en soi connue, et elle peut être fixe ou, le cas échéant, peut être disposée sur le support 1 de sorte à pouvoir être remplacée ou rechangée. Les parties 1 et 2 ne diffèrent pas nécessairement des parties correspondantes habituelles, et le cas échéant elles peuvent même être justement les parties qu'on monte habituellement sur les fers à souder connus.

L'extrémité arrière du support 1 pour l'élément thermique, opposée à la pointe à souder 2, est connectée à un corps de support 3, dans lequel elle peut être enfoncée ou fixée de toute façon. Dans les constructions connues, le corps de support 3 constitue toujours l'extrémité avant d'une poignée. Au contraire, dans l'application de l'invention, le corps de support 3 est une partie située vers l'extrémité arrière d'une poignée creuse 4, substantiellement tubulaire et entourant sur une grande partie de son extension la tige tubulaire 1, sa paroi étant disposée à une certaine distance de cette dernière. Dans l'exemple représenté la poignée creuse 4 est substantiellement cylindrique, elle a une section circulaire et s'étend coaxialement autour de la tige tubulaire. Toutefois il faut comprendre que ces caractéristiques ne sont nullement obligatoires. Les caractéristiques essentielles de la poignée suivant l'invention sont seulement qu'elle est creuse et qu'elle entoure sur une grande partie de son extension le support de l'élément thermique du fer à souder, sans avoir contact avec lui. Ces conditions étant respectées, la forme de la poignée et sa disposition par rapport au support de l'élément thermique peuvent être choisies avec une grande liberté. En tous cas, la pointe à souder 2 doit faire saillie de l'extrémité avant de la poignée creuse 4 sur une extension limitée, mais suffisante pour permettre d'effectuer l'opération de soudage.

Comme on le comprend, en saisissant la poignée creuse 4, l'opérateur dispose sa main le plus possible voisin de la pointe à souder 2, et par conséquence il peut facilement manipuler le fer à souder avec une sensibilité et une précision que seulement avec difficulté et faisant usage d'une grande habileté on pourrait atteindre avec un fer à souder connu, dans lequel la main de l'opérateur se trouve à une distance considérable de la pointe à souder.

Il est avantageux que la poignée creuse 4 soit pourvue d'une ample fenêtre 7, disposée en position telle à ne pas être couverte par les doigts de l'opérateur qui saisit le fer à souder. Cette fenêtre 7, compte tenu du fait que la paroi de la poignée creuse se trouve à une certaine distance par rapport au support de l'élément thermique, autorise une circulation efficace de l'air entre le creux de la poignée 4 et l'extériéur. Par conséquence on évite que dans le creux de la poignée demeure de l'air très chauffé par l'élément thermique du fer à souder, cet air transmettant inutilement de la chaleur à la poignée. On évite ainsi que la poignée 4 puisse atteindre, même pendant des longues périodes de travail ininterrompu, une température telle à gêner l'opérateur.

De préférence la poignée 4 est prolongée sur une courte longueur, a l'arrière du corps de support 3, par une partie 5 définissant une chambre 6 dans laquelle ouvre l'estrémité arrière de la tige tubulaire 1 traversant le corps de support 3. Dans cette chambre 6 peut être porté le câble d'alimentation 10, de préférence en le faisant passer à travers une appendice 8 de la poignée 4. La chambre 6 peut ainsi renfermer des bornes 11 pour la connexion des conducteurs externes d'alimentation au conducteurs internes de l'élément thermique disposé dans la tige tubulaire 1. La chambre 6 peut être fermée vers l'extérieur de toute façon adéquate, par exemple moyennant un petit couvercle 12.

L'appendice 8 de la poignée 4 oblige dans certaines limites la position de saisie de la poignée et elle empêche sa rotation dans la main de l'opérateur, à l'avantage de la stabilité de la saisie et de la praticité de la manipulation.

La poignée 4 avec ses parties 5, 8 peut être fabriquée avantageusement en matière plastique d'une façon telle à retenir le câble d'alimentation qui la traverse. Cet agencement avantageux, habituel en d'autres espèces d'appareils électriques, jusqu'ici ne pouvait pas être utilisé dans les fers à souder électriques, en considération des conformations de leurs poignées.

Il va de soi que toutes les caractéristiques particulières décrites peuvent être remplacées par leurs équivalents techniques.

En vertu des dispositions prises, la chaleur transmise à la poignée du fer à souder suivant l'invention est du même ordre de grandeur de la chaleur transmise à la poignée des fers à souder connus, et la poignée n'atteint pas des températures élevées. Par conséquence, pour fabriquer la poignée on peut utiliser une quelconque des matières plastiques habituellement employées à cet effet. En tous cas, du moment qu'il s'agit d'un appareil thermique, il est à propos de faire usage d'une matière plastique ayant une bonne résistance à la chaleur, comme une résine acrylonitryle-butadiène-styrène, un polycarbonate, une polyamide ou toute autre matière plastique adéquate.

Bien entendu, les dimensions du fer à souder suivant l'invention peuvent être modifiées suivant la puissance prévue. Toutefois, en considération de la particulière sensibilité de manipulation possible, ce modèle de fer à souder est particulièrement adapté pour des outils de puissance faible ou moyenne, destinés à des travaux de précision comme ceux du domaine électronique. Comme on l'a dit, le fer à souder peut avoir une pointe fixe de toute forme, ou bien une pointe rechangeable; de plus il peut être aussi d'un type pourvu de contrôle thermostatique de la température de la pointe à souder.

**Revendications**

1 . Fer à souder à main, comprenant une poignée (4) et un support (1) renfermant un élément thermique et se terminant par une pointe à souder (2), caractérisé en ce que la poignée (4) du fer à souder est creuse, et que le support (1) renfermant l'élément thermique et se terminant par la pointe à souder (2) s'étend pour une grande partie de sa longueur à l'intérieur et à une certaine distance de la paroi de la poignée creuse (4), d'une extrémité de laquelle fait saillie sur une extension limitée la pointe à souder (2).

2 . Fer à souder à main suivant la revendication 1, caractérisé en ce que la poignée creuse (4) présente, en une région sur laquelle ne se disposent pas les doigts de l'opérateur, une ample fenêtre (7) autorisant une circulation de l'air entre le creux de la poignée (4) et l'extérieur.

3 . Fer à souder à main suivant la revendication 1, caractérisé en ce que la poignée creuse (4) forme, vers son extrémité arrière, un corps de support (3) auquel est fixé le support (1) de l'élément thermique et de la pointe à souder (2).

4 . Fer à souder à main suivant la revendication 3, caractérisé en ce que la poignée creuse (4) s'étend à l'arrière au-delà du corps de support (3) par une partie (5) définissant une chambre (6) destinée à renfermer les connexions électriques (11) entre l'élément thermique et les conducteurs d'alimentation.

5 . Fer à souder à main suivant la revendication 1, caractérisé en ce que la poignée creuse (4) est fabriquée, substantiellement en une seule pièce principale, en matière plastique.

6 . Fer à souder à main suivant la revendication 5, caractérisé en ce que la poignée creuse (4) comporte une appendice (8) pour le passage du câble d'alimentation (10) et pour la stabilisation de la saisie de la poignée.

7 . Fer à souder à main suivant la revendication 6, caractérisé en ce que la poignée creuse (4) est fabriquée en une matière plastique ayant une bonne résistance à la chaleur, spécialement en acrylonitryle-butadiène-styrene, polycarbonate ou polyamide.

FIG. 1

FIG. 2

FIG. 3

FIG. 4

**Office européen des brevets**

## RAPPORT DE RECHERCHE EUROPEENNE

Numero de la demande

EP    90 20 0071

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|-----------|--------------------------------------------------------------------------------|-------------------------|--------------------------------------|
| X | US-A-4045651 (KOO)<br>* colonne 2, ligne 4 - colonne 3, ligne 34; figure unique * | 1-3 | B23K3/02 |
| A | | 7 | |

**DOMAINES TECHNIQUES RECHERCHES (Int. Cl.5)**

B23K

Le présent rapport a été établi pour toutes les revendications

| Lieu de la recherche | Date d'achèvement de la recherche | Examinateur |
|----------------------|-----------------------------------|-------------|
| LA HAYE | 23 MAI 1990 | DEMOLDER J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)